# EUROPEAN PATENT SPECIFICATION

(11) **EP 0 697 791 B1**
(45) Date of publication and mention of the grant of the patent: **26.01.2000**
(21) Application number: 95111651.6
(22) Date of filing: 25.07.1995
(51) Int. Cl.: H04N 5/63

(54) **Apparatus for determining if the duration of a power failure exceeded predetermined limits**
Vorrichtung zum Bestimmen ob die Dauer eines Stromversorgungsausfalls eine vorgegebene Grenze überschreitet
Dispositif pour déterminer si la durée d'une panne d'alimentation dépasse des limites prédéterminées

(30) Priority: 05.08.1994 US 286867
(43) Date of publication of application: 21.02.1996
(73) Proprietor: THOMSON CONSUMER ELECTRONICS, INC., Indianapolis, IN 46206 (US)
(72) Inventor: Landis, Michael David, Fishers, IN (US); Browning, David Michael, Indianapolis, IN (US); Edde, Gabriel Alfred, Apartment 1D, Indianapolis, IN (US)
(74) Representative: Wördemann, Hermes, Dipl.-Ing.

(56) References cited:
- EP-A- 0 467 578
- EP-A- 0 573 919
- PATENT ABSTRACTS OF JAPAN vol. 016, no. 316 (E-1231), 10 July 1992 & JP-A-04 088769 (MITSUBISHI ELECTRIC CORP), 23 March 1992,

## Description

The subject invention concerns reset circuitry for electronics equipment, such as, television receivers.

The design of modern television receivers increasingly involves the use of digitally controlled chips (i.e., integrated circuits) for control of many different functions, such as, picture processing, picture-in picture (PIP) processing, and audio processing. These chips are connected to a controller (which may be a microprocessor, a microcomputer, or a dedicated control IC) via a communications bus. The controller is responsible for writing control parameters to the chips and reading status information from the chips.

It is known, for example, in D1, EP-A-0-467578 that an electronic device can be implemented with two kinds of power source switches, a main switch and a relay switch. The electronic device will only be turned on if both of the switches are operated. If, however, the contents of a memory which stores the on/off state of the relay switch indicates that the relay switch is off, detection of a change of the main switch for off to on serves to turn on the device. In addition, it is possible for a television receiver to store data indicating whether or not the receiver is turned on, as disclosed in D2, EPO A2-0573919.
After an AC power line failure, the receiver can use this stored data to determine if it was on when the power failure occurred and automatically turn itself on again. Unfortunately, it is not always desirable for the controller to turn the receiver back on after an AC power line failure, for example, where the power failure has lasted several hours and the receiver would turn on in the middle of the night, perhaps at a loud volume setting.

Moreover, in television receivers equipped with a real time clock, there is no way for the controller to determine how long the power was interrupted.

It is herein recognized that an external timer can be used to time a predetermined brief period (e.g. between 15 seconds and 1 minute). If the timer has not yet expired when standby power is once again developed, then the controller will cause a real time clock unit to start timing, using the currently-held time of day. If the timer has expired when standby power is once again developed, the controller will cause the time of day clock to indicate that its time is no longer accurate. Moreover, if the timer has expired, then the controller will not cause the receiver to be turned on. If the timer has not expired, then the controller will determine if the receiver was turned on when the AC power line failure occurred, and if so, the controller will cause the receiver to turn on. If the receiver was turned off when the AC power line failure occurred, then the controller will cause the receiver to remain in standby mode.

If, however, a reset was caused by an extremely fast phenomenon, such as a kine arc, then the receiver would not have had time to store status bytes. Upon waking up, the receiver would note that it was inoperative for only a short time, and that certain functions, such as degaussing need not be performed.

In accordance with an aspect of the invention, reset circuitry for an electronics instrument, especially a television receiver, comprises: a reset circuit for generating a reset signal; control means coupled to the reset circuit for receiving the reset signal; nonvolatile memory means coupled to the control means for storing data indicative of the operational status of the electronics instrument; a time of day clock coupled to the control means for keeping time of day; standby power supply means coupled to the control means for supplying power to the control means; and external timing means for timing a predetermined time period during an AC power line failure; and wherein the control means stores the indication of the operational status of the electronic instrument in the nonvolatile memory means; the reset circuit causes the control means to assume a known state after an interruption of AC power; the control means reads a signal of the external timing means to determine if the predetermined time period had expired; the control means restarts the time of day clock with the currently stored time if the predetermined time period had not expired; and the control means reads the data indicative of the status of the electronics instrument and turns on the electronics instrument if the electronics instrument was on when the AC power failure occurred, and if the predetermined time period had not expired (see claim 1). In accordance with an other aspect the invention relates to a method to reset an electronic instrument, especially a television receiver (claim 4).

FIGURE 1 shows, in block diagram form, an electronic instrument in accordance with the invention.

FIGURE 2 shows a flowchart of a portion of the control program of FIGURE 1.

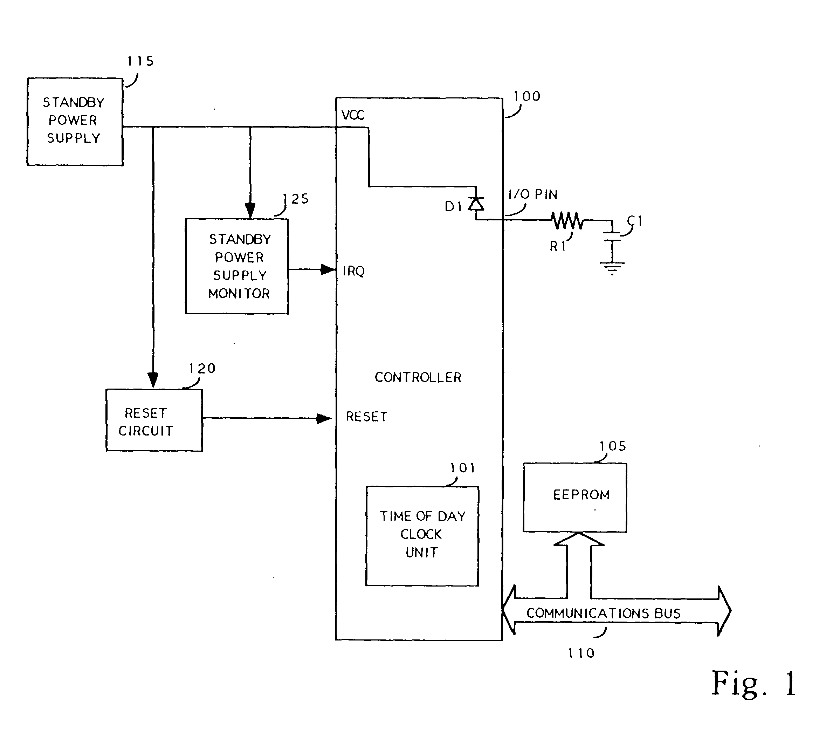

The electronics instrument of FIGURE 1 may be, for example, a television receiver, although the invention is not so limited. The term television receiver, as used herein, includes television receivers having a display screen (commonly called TV sets), and television receivers without a display screen, such as VCRs (videocassette recorders), VCPs (videocassette players), and Videodisc players. The television receiver of FIGURE 1 includes Controller 100 communicating with an EEPROM 105, and other processing units (not shown) over a Communications Bus 110. Controller 100 includes a TIME of DAY CLOCK Unit 101, which could also be an external clock unit. Controller 100 receives power from a Standby Power Supply 115. Standby Power Supply 115 is well-known in the art and generates a DC supply voltage whenever it is plugged into the AC power line. The output of Standby Power Supply 115 is monitored by a Standby Power Supply Monitor 125, which applies a signal indicating the condition of Standby Power Supply 115 to the IRQ (Interrupt Request) input pin of Controller 100. A Reset circuit 120 senses the development of standby power and generates a reset signal for controller 100.

Standby Power Supply Monitor 125 is used to detect failures of the incoming AC power line. That is, if the output of Standby Power Supply 150 begins to go low in response to an AC power line failure, controller 100 receives a warning signal and responds by storing critical data for an orderly shut down of the receiver. Controller 100 has enough time to store the critical data because its own power line is held up for a short time by a storage capacitor (not shown) Resistor R1 and capacitor C1 form a timing circuit which operates as follows. During normal operation the pin labelled I/O pin is configured as an output. As such, it develops a high logic level signal to keep capacitor C1 charged. When an AC power line failure occurs, the Standby Power Supply output voltage falls to zero volts. At that time, SCR protection diode D1, internal to controller 100, begins to conduct and discharge the voltage on capacitor C1 through resistor R1. Capacitor C1 and resistor R1 have relatively high values (i.e., 100 kilohms ≤ R1 ≤ 1 Meg Ohm, and 10 µf ≤ C1 ≤ 50 µf), and preferably will maintain a high logic level for a predetermined duration of time in the range of approximately fifteen seconds to one minute.

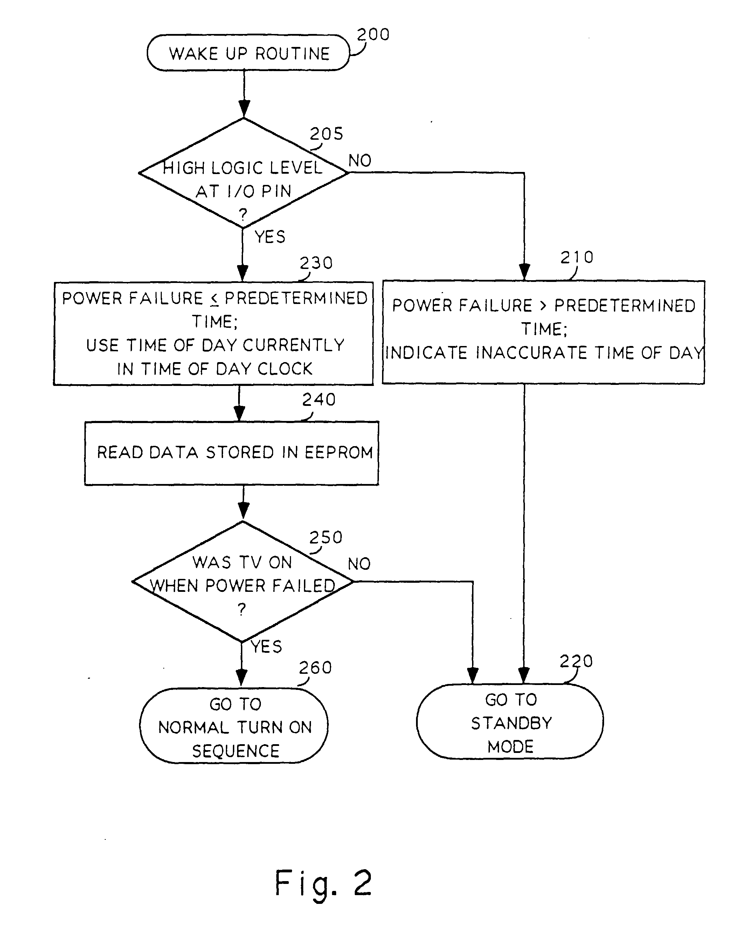

FIGURE 2 is a flowchart of a portion of the control program of controller 100 showing a portion of the code exercised when the controller "wakes-up" after a power failure (i.e., that portion of the code executed in response to a reset command). In response to a reset command, the routine of FIGURE 2 is entered at step 200. The logic level at the I/O pin is checked at step 205 (note that after a reset function, Controller 100 configures its I/O pins to be inputs). If a low logic level appears on the I/O pin of controller 100, then the power failure is determined to be greater than the predetermined time period (i.e., a period in the range of fifteen seconds to 1 minute) and the routine is exited at step 220 wherein the receiver is maintained in the standby mode (i.e., off). If at step 205 a high logic level was read at the I/O pin of Controller 100, then the YES path is taken to step 230 where Time of Day Clock 101 is restarted using the currently held time. In this regard, it is felt that a Time of Day error of 15 seconds to 1 minute is acceptable, but any greater error should be indicated. The routine then advances to step 240 where the EEPROM is read to see if the receiver was on or off when the AC power line failure occurred. If the receiver was on, then the YES path is taken, and the routine advances to step 260 wherein power is reapplied to all devices via the normal turn on sequence. If the receiver was off at step 230, then the NO path is taken to step 220 wherein the receiver remains in standby mode. After power restoration, Controller 100 reconfigures the I/O pin back to an output pin and sets a high level at that output to recharge C1 through R1, and is again ready for the next power failure.

A dual use of the RC timer network has been described in which the elapsed time since the power failure determines the course of action which follows, both with respect to using the currently-stored time of day, and with respect to whether it is appropriate to turn on the receiver again.

In the normal course of an AC power failure, the IRQ line goes low a predetermined time before a reset is generated, due to the power hold-up capacitor (not shown). This gives controller 100 time to store the status information, such as whether the receiver was on or off, current channel, current volume setting, and time of day. In addition, a NORM/FAST bit is set (e.g. logic level 1) to indicate that what has occurred is a normal AC power outage. This bit is normally left in a reset state (e.g. logic level 0) to indicate that what has occurred is a fast reset (because during a fast reset caused by a kine arc there is no time to save any data). Thus, if controller 100 wakes up from a reset and checks the status bytes from EEPROM 105, and finds that the NORM/FAST bit is reset, then controller 100 determines that a fast reset occurred (i.e., not a power failure), and that certain procedures normally accomplished during a power up mode, such as degaussing the picture tube, need not be performed. Thus, the described system can distinguish three different kinds of resets, very short (e.g. caused by kine arcs), medium (15 seconds to 1 minute), and long (greater than 1 minute).

Instead of displaying an indication of inaccurate time when a long reset has occurred, it is also acceptable to use the currently-stored time. Thus, the clock will function in much the same way as an analog electric clock, and the viewer will be able to tell how long the power was off by checking the displayed time against the actual time.

While the timing function was accomplished using an RC network, it can also be accomplished by using timing chips, such as digital counters, and such an embodiment is intended to be within the scope of the following claims. The terms microcontroller, microprocessor, and controller, as used herein, are considered to be equivalent and interchangeable for purposes of the subject invention.

## Claims

1. Reset circuitry for an electronics instrument, especially a television receiver, comprising:
a reset circuit ( 120) for generating a reset signal;
control means (100) coupled to said reset circuit (120) for receiving said reset signal; and
nonvolatile memory means ( 105) coupled to said control means (100) for storing data indicative of the operational status of said electronics instrument; said electronic instrument being characterized by:
a time of day clock (101) coupled to said control means (100) for keeping time of day;
standby power supply means (115) coupled to said control means (100) for supplying power to said control means (100); and external timing means (R 1,C 1 ) for timing a predetermined time period during an AC power line failure; and further characterized by
said control means (100) storing said indication of the operational status of said electronic instrument in said nonvolatile memory means;
said reset circuit (120) causing said control means (100) to assume a known state after an interruption of AC power;
said control means (100) reading a signal of said external timing means to determine if said predetermined time period had expired;
said control means (100) restarting said time of day clock with the currently stored time if said predetermined time period had not expired; and
said control means ( 100) reading said data indicative of the status of said electronics instrument and turning on said electronics instrument if said electronics instrument was on when said AC power failure occurred, and if said predetermined time period had not expired.

2. The circuitry of claim 1, further characterized in that said external timing means (R1,C1) is an RC circuit.

3. The circuitry of claim 1, further characterized in that said predetermined time period is within a range from 15 seconds to 1 minute.

4. A method to reset an electronic instrument, especially a television receiver, said electronic instrument comprising control means (100) for controlling said electronic instrument; reset means (120) coupled to said control means; and memory means (105) coupled to said control means (100);
a time of day clock (101) coupled to said control means (100) for keeping time of day; and
standby power supply means (115) coupled to said control means (100) for supplying power to said control means (100); and external timing means (Rl,C1) for timing a predetermined time period during a power failure; wherein
said reset means (100) resetting said control means (100) to a known state after an interruption of power; and
said memory means for storing data indicative of the operational status of said electronics instrument; and said method comprising the steps of:
resetting said control means (100) to a known state after an interruption of power;
determining (205) if said interruption had a duration greater than said predetermined time period, and if said duration did not exceed (230) said predetermined time period then performing the steps of:
1) restarting (230) said time of day clock with the currently stored time; and
2 ) reading (240) said data indicative of the status of said electronics instrument.

## Patentansprüche

1. Rückstellschaltung für ein elektronisches Gerät, insbesondere einen Fernsehempfänger, umfassend:
eine Rückstellschaltung (120) zur Erzeugung eines Rückstellsignals; mit der Rückstellschaltung (120) verbundene Steuermittel (100) zum Empfang des Rückstellsignals; und
nicht flüchtige Speichermittel (105), die mit den Steuermitteln (100) verbunden sind, um Daten zu speichern, die den Betriebszustand des elektronischen Gerätes anzeigen; wobei das elektronische Gerät gekennzeichnet ist durch:
eine Tageszeit-Uhr (101), die mit den Steuermitteln (100) verbunden ist, um die Tageszeit festzuhalten;
Bereitschafts-Stromversorgungsmittel (115), die mit den Steuermitteln (100) verbunden sind, um die Steuermittel (100) mit Strom zu versorgen; und externe Zeitsteuermittel (R1, C1) zur Zeitsteuerung einer vorgegebenen Zeitdauer während eines Ausfalls der Wechselstrom-Versorgungsleitung; und ferner gekennzeichnet dadurch daß:
die Steuermittel (100) die Anzeige des Betriebszustands des elektronischen Gerätes in den nicht flüchtigen Speichermitteln speichern;
die Rückstellschaltung (120) bewirkt, daß die Steuermittel (100) nach einer Unterbrechung der Wechselstrom-Versorgung einen bekannten Zustand annehmen;
die Steuermittel (100) ein Signal der externen Zeitsteuermittel lesen, um zu bestimmen, ob die vorgegebene Zeitdauer abgelaufen war;
die Steuermittel (100) die Tageszeit-Uhr mit der gegenwärtig gespeicherten Zeit neu starten, wenn die vorgegebene Zeitdauer nicht abgelaufen iwar und
die Steuermittel (100), die den Betriebszustand des elektronischen Gerätes anzeigenden, Daten lesen und das elektronische Gerät einschalten, wenn das elektronische Gerät eingeschaltet war, als der Wechselstrom-Ausfall geschah und die vorgegebene Zeitdauer nicht abgelaufen war.

2. Schaltung nach Anspruch 1, dadurch gekennzeichnet, daß die externen Zeitsteuermittel (R1, C1) aus einer RC-Schaltung bestehen.

3. Schaltung nach Anspruch 1, dadurch gekennzeichnet, daß die vorgegebene Zeitdauer in einem Bereich von 15 Sekunden bis zu einer Minute liegt.

4. Verfahren zur Rückstellung eines elektronischen Gerätes, insbesondere eines Fernsehempfängers, wobei das elektronische Gerät umfaßt: Steuermittel (100), um das elektronische Gerät zu steuern; Rückstellmittel (120), die mit den Steuermitteln verbunden sind; und Speichermittel (105), die mit den Steuermitteln (100) verbunden sind;
eine Tageszeit-Uhr (101), die mit den Steuermitteln (100) verbunden ist, um die Tageszeit festzuhalten; und
Bereitschafts-Stromversorgungsmittel (115), die mit den Steuermitteln (100) verbunden sind, um die Steuermittel (100) mit Strom zu versorgen; und externe Zeitsteuermittel (R1, C1) zur Zeitsteuerung einer vorgegebenen Zeitdauer während eines Stromausfalls; wobei
die Rückstellmittel (120) die Steuermittel (100) nach einer Unterbrechung der Stromversorgung auf einen bekannten Zustand und
die Speichermittel zur Speicherung der den Betriebszustand des elektronischen Gerätes anzeigenden Daten zurückstellen, und wobei das Verfahren die Schritte umfaßt:
Rückstellen der Steuermittel (100) auf einen bekannten Zustand nach einer Unterbrechung der Stromversorgung;
Bestimmen (205), ob die Unterbrechung eine größere Zeitdauer hatte als die vorgegebene Zeitdauer, und wenn die Zeitdauer die vorgegebene Zeitdauer nicht überschritten hatte (230), Ausführung der Schritte:
1) Neustart (230) der Tageszeit-Uhr mit der gegenwärtig gespeicherten Zeit; und
2) Lesen (240) der den Zustand des elektronischen Gerätes anzeigenden Daten.

## Revendications

1. Circuiterie de réinitialisation pour un instrument électronique, en particulier un récepteur de télévision, comprenant:
un circuit de réinitialisation (120) pour générer un signal de réinitialisation;
un moyen de commande (100) couplé audit circuit de réinitialisation (120) pour recevoir ledit signal de réinitialisation; et
un moyen de mémoire non volatile (105) couplé audit moyen de commande (100) pour stocker des données indicatrices de l'état opérationnel dudit instrument électronique;
ledit instrument électronique étant caractérisé par:
une horloge de l'heure du jour (101) couplée audit moyen de commande (100) pour garder l'heure du jour;
un moyen d'alimentation de veille (115) couplé audit moyen de commande (100) pour alimenter ledit moyen de commande (100); et un moyen de minutage externe (R1, C1) pour minuter un intervalle de temps prédéterminé lors d'une panne de secteur; et caractérisée en outre en ce que:
ledit moyen de commande (100) stocke ladite indication de l'état opérationnel dudit instrument électronique dans ledit moyen de mémoire non volatile;
ledit circuit de réinitialisation (120) fait en sorte que ledit moyen de commande (100) prenne un état connu suite à une interruption de l'alimentation;
ledit moyen de commande (100) lit un signal dudit moyen de minutage externe pour déterminer si ledit intervalle de temps prédéterminé a expiré;
ledit moyen de commande (100) redémarre ladite horloge de l'heure du jour avec l'heure actuellement en mémoire si ledit intervalle de temps prédéterminé n'a pas expiré; et
ledit moyen de commande (100) lit lesdites données indicatrices de l'état dudit instrument électronique et met ledit instrument électronique sous tension si ledit instrument électronique était sous tension au moment de ladite panne d'alimentation, et si ledit intervalle de temps prédéterminé n'a pas expiré.

2. Circuiterie selon la revendication 1, caractérisée en outre en ce que ledit moyen de minutage externe (R1, CI) est un circuit RC.

3. Circuiterie selon la revendication 1, caractérisée en outre en ce que ledit intervalle de temps prédéterminé va de 15 secondes à 1 minute.

4. Méthode pour réinitialiser un instrument électronique, en particulier un récepteur de télévision, ledit instrument électronique comprenant un moyen de commande (100) pour commander ledit instrument électronique; un moyen de réinitialisation (120) couplé audit moyen de commande; et un moyen de mémoire (105) couplé audit moyen de commande (100);
une horloge de l'heure du jour (101) couplée audit moyen de commande (100) pour garder l'heure du jour; et
un moyen d'alimentation de veille (115) couplé audit moyen de commande (100) pour alimenter ledit moyen de commande (100); et un moyen de minutage externe (R1, C1) pour minuter un intervalle de temps prédéterminé lors d'une panne d'alimentation; dans laquelle:
ledit moyen de réinitialisation (120) réinitialisant ledit moyen de commande (100) à un état connu suite à une interruption de l'alimentation; et
ledit moyen de mémoire pour stocker des données indicatrices de l'état opérationnel dudit instrument électronique; et ladite méthode comprenant les étapes consistant à:
réinitialiser ledit moyen de commande (100) à un état connu suite à une interruption de l'alimentation; et
déterminer (205) si la durée de ladite interruption était supérieure audit intervalle de temps prédéterminé, et si ladite durée ne dépassait pas (230) ledit intervalle de temps prédéterminé, mettre alors en oeuvre les étapes consistant à:
1) redémarrer (230) ladite horloge de l'heure du jour avec l'heure actuellement en mémoire; et
2) lire (240) lesdites données indicatrices de l'état dudit instrument électronique.
